# EUROPÄISCHE PATENTSCHRIFT

(11) **EP 1 855 016 B1**
(45) Veröffentlichungstag und Bekanntmachung des Hinweises auf die Patenterteilung: **02.12.2009**
(21) Anmeldenummer: 07005536.3
(22) Anmeldetag: 17.03.2007
(51) Int. Cl.: F16B 13/12

(54) **Dübel**
Dowel
Cheville

(30) Priorität: 10.05.2006 DE 102006023024
(43) Veröffentlichungstag der Anmeldung: 14.11.2007
(73) Patentinhaber: Adolf Würth GmbH & Co. KG, 74653 Künzelsau (DE)
(72) Erfinder: Wieland, Achim, 74211 Leingarten (DE)
(74) Vertreter: Patentanwälte Ruff, Wilhelm, Beier, Dauster & Partner

(56) Entgegenhaltungen:
- DE-A1- 2 840 087
- DE-A1- 3 416 797
- DE-U1- 9 110 499

## Beschreibung

Die Erfindung betrifft einen Dübel, insbesondere einen aus Kunststoff bestehenden Dübel, wie er zum Beispiel zur Befestigung von Fensterrahmen an Mauerwerk bekannt ist.

Bei Kunststoffdübeln gibt es grundsätzlich zwei verschiedene Arten, nämlich solche Dübel, bei denen ein Dübelfuß durch eine Schraube in Richtung auf das gegenüberliegende Ende des Dübels gezogen wird, so dass Spreizschenkel nach außen gedrückt oder auch tordiert werden. Die zweite Art sind Dübel, bei denen durch das Einschrauben eines Aufweitelements Teile der Dübelhülse nach außen aufgeweitet werden.

Bei einem bekannten Rahmendübel dieser Art (EP 964169 A) sind dreieckige Spreizelemente vorhanden, die durch eine in das Innere des Dübels eingeschraubte Schraube nach außen verschwenkt werden. In nicht aufgeweitetem Zustand des Dübels weist die Dübelhülse eine glattflächige Außenkontur auf, bei der die Aufspreizelemente bündig mit dem Rest der Dübelhülse verlaufen.

Weiterhin ist ein Dübel bekannt, der mindestens einen über den größten Teil seiner Länge verlaufenden Schlitz aufweist, der zwei Spreizschenkel bildet. Die beiden Spreizschenkel sind an ihrer Außenseite profiliert ausgebildet und bilden Vorsprünge und Rücksprünge, die sich in Längsrichtung und Umfangsrichtung abwechseln (DE-A1 2840087).

Der Erfindung liegt die Aufgabe zu Grunde, einen Spreizdübel zu schaffen, der sich insbesondere bei kleineren Nenndurchmessern leichter herstellen lässt.

Zur Lösung dieser Aufgabe schlägt die Erfindung einen Dübel mit den im Anspruch 1 genannten Merkmalen vor. Weiterbildungen der Erfindung sind Gegenstand von Unteransprüchen.

Bei diesem von der Erfindung vorgeschlagenen Dübel gibt es in dem Aufspreizbereich, der sich vorzugsweise nicht über die gesamte Länge der Dübelhülse erstreckt, sowohl Aufspreizelemente als auch Rücksprungelemente, die zwischen den Aufspreizelementen angeordnet sind. Beim Aufspreizen des Dübels durch Einfügen eines Spreizelements, beispielsweise einer Schraube, in den Innenraum der Dübelhülse werden nun sowohl die Aufspreizelemente als auch die Rücksprungelemente nach außen bewegt. Die Aufspreizelemente werden gegen die Wand des Dübellochs angepresst, und die Kanten der Aufspreizelemente bewirken die Verriegelung des Dübels gegenüber dem Loch.

In Weiterbildung der Erfindung kann vorgesehen sein, dass in dem nicht aufgeweiteten Zustand des Dübels die Rücksprungelemente mit ihren Außenkonturen gegenüber den Außenkonturen der Aufspreizelemente nach innen versetzt angeordnet sind. Im Gegensatz zum Stand der Technik weist der Dübel also im nicht aufgeweiteten Zustand keine glattflächige Außenkontur auf.

Dagegen kann in Weiterbildung der Erfindung vorgesehen sein, dass in dem nicht aufgeweiteten Zustand des Dübels die Innenkonturen der Aufspreizelemente und der Rücksprungelemente bündig zueinander verlaufen, das heißt in einer im wesentlichen glatten Zylinderfläche liegen.

In nochmaliger Weiterbildung der Erfindung kann vorgesehen sein, dass in dem nicht aufgeweiteten Zustand des Dübels die Innenkonturen der Aufspreizelemente und/oder der Rücksprungelemente gegenüber einer Kreiszylinderfläche nach innen vorspringen. Es kann vorgesehen sein, dass der Querschnitt des Innenraums im nicht aufgeweiteten Zustand angenähert die Form einer Acht aufweist.

In nochmaliger Weiterbildung der Erfindung kann vorgesehen sein, dass die Aufspreizelemente und die Rücksprungelemente in Umfangsrichtung die gleiche Erstreckung aufweisen.

Erfindungsgemäß kann vorgesehen sein, dass die Aufspreizelemente und die zwischen ihnen angeordneten Rücksprungelemente in mindestens einem in Längsrichtung der Dübelhülse verlaufenden Bereich angeordnet sind, der sich in Umfangsrichtung nur über einen bestimmten Teil der Dübelhülse erstreckt. Insbesondere kann vorgesehen sein, dass zwei derartige Bereiche angeordnet sind, die vorzugsweise diametral gegenüber liegend verlaufen. Dadurch ergibt sich bei ausreichender mechanischer Stabilität der Dübelhülse eine gute Verankerung des aufgeweiteten Dübels in dem Bohrloch.

Die Art, wie die Aufspreizelemente nach außen bewegt werden, wird vorzugsweise so gewählt, dass die Aufspreizelemente nach außen verschwenkt werden, wozu sie beispielsweise an einer Kante mit der Dübelhülse verbunden sind. Um diese Kante erfolgt dann eine Verschwenkung und/oder eine mit Abstand von der Kante zunehmende Verformung der Aufspreizelemente. Die Lage dieser eine Schwenkachse bildenden Kante kann beliebig sein, besonders sinnvoll und bevorzugt ist aber ein Verlauf dieser Kante in Längsrichtung der Dübelhülse.

Die Rücksprungelemente, die zur Stabilität der Dübelhülse beitragen, sind in Weiterbildung gegenüber der Dübelhülse verbiegbar ausgebildet, werden also im Wesentlichen durch Verformung nach außen bewegt.

Erfindungsgemäß kann vorgesehen sein, dass die Aufspreizelemente Dreieckform aufweisen, wobei eine Seite des Dreiecks die Verbindungskante mit der Dübelhülse bildet.

Die Rücksprungelemente können beispielsweise durch schmale Schlitze von den Aufspreizelementen getrennt sein.

Erfindungsgemäß ist vorgesehen, dass die Rücksprungelemente an ihren beiden Enden, in Umfangsrichtung gesehen, mit der Dübelhülse verbunden sind.

In Weiterbildung der Erfindung kann vorgesehen sein, dass die Aufspreizelemente, die an einer ihrer Seiten an der Dübelhülse angeformt sind, unterschiedlich orientiert sind. Beispielsweise können die Aufspreizelemente abwechselnd an beiden Seiten des die Aufspreizelemente aufweisenden Feldes angeformt sein. Denkbar ist natürlich auch, dass zwei oder mehr Aufspreizelemente an der gleichen Seite angeformt und dann ein nächstes Aufspreizelement an der gegenüberliegenden Seite dieses Feldes angeformt ist.

Erfindungsgemäß kann in Weiterbildung vorgesehen sein, dass ein Aufspreizelement eine quer zur Längsachse des Dübels verlaufende Kante aufweist, wobei es sich sowohl um die dem äußeren als auch um die dem inneren Ende des Dübels zugewandte Kante handeln kann.

Insbesondere kann vorgesehen sein, dass die Aufspreizelemente sich so abwechseln, dass bei einem Aufspreizelement die dem äußeren Ende der Dübelhülse zugewandte Kante quer zur Längsachse verläuft, während bei dem benachbarten Aufspreizelement die der inneren Dübelspitze zugewandte Kante quer zur Längsachse verläuft. Diese beiden Aufspreizelemente können an der gleichen axialen Stelle der Dübelhülse angeordnet sein und dadurch ein Paar bilden.

In Weiterbildung kann vorgesehen sein, dass zwischen je einem Paar von Aufspreizelementen, insbesondere einem Paar komplementär zueinander ausgebildeter Aufspreizelemente, ein Rücksprungelement angeordnet ist. Dieses Rücksprungelement kann insbesondere als schmaler Streifen konstanter Breite ausgebildet sein, der zwischen den beiden Rändern des die Aufspreizelemente aufweisenden Feldes verläuft.

In nochmaliger Weiterbildung der Erfindung kann vorgesehen sein, dass die beiden die Aufspreizelemente enthaltenden Felder durch jeweils einen in Längsrichtung verlaufenden und ununterbrochenen Längssteg getrennt sind. Diese Längsstege können an ihre Außenseite leicht gerippt ausgebildet sein, wobei die Rippen in Umfangsrichtung verlaufen.

In nochmaliger Weiterbildung der Erfindung kann vorgesehen sein, dass die Längsstege an ihrer Innenseite eine vorzugsweise in Längsrichtung verlaufende Rippe aufweisen. Diese Rippe kann nicht nur zur Aufnahme des von der den Dübel aufspreizenden Schraube geformten Gewindes dienen, sondern auch dazu, die Längsstege ebenfalls nach außen zu beaufschlagen, um dadurch eine verbesserte Haltewirkung zu erreichen.

Erfindungsgemäß können die Innenseiten von Längsstegen und Aufspreizelementen so ausgebildet sein, dass die Innenöffnung des Dübels eine Querschnittsform nach Art eines Malteser Kreuzes aufweist.

Erfindungsgemäß kann vorgesehen sein, dass die Aufspreizelemente und/oder die Rücksprungelemente auf beiden Seiten des Dübels als wiederkehrendes Muster ausgebildet sind, wobei sie auf der einen Seite um einen halben Rapport gegenüber den Aufspreizelementen beziehungsweise Rücksprungselementen auf der anderen Seite des Dübels versetzt angeordnet sind.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: eine perspektivische Seitenansicht einer Dübelhülse nach der Erfindung;
- Figur 2: eine der Figur 1 entsprechende Darstellung aus einer anderen Richtung;
- Figur 3: eine Seitenansicht eines Dübels nach der Erfindung;
- Figur 4: einen Längsschnitt durch den Dübel;
- Figur 5: einen Schnitt durch einen Dübelabschnitt in nicht aufgeweitetem Zustand;
- Figur 6: einen der Figur 5 entsprechenden Schnitt in aufgeweitetem Zustand;
- Figur 7: eine Stirnansicht des Dübels von oben in Figur 3.
- Figur 8: die Seitenansicht eines Dübels bei einer zweiten Ausführungsform;
- Figur 9: die Seitenansicht des Dübels der Figur 8 aus einer um 90° versetzten Richtung;
- Figur 10: in vergrößertem Maßstab einen Querschnitt durch den Dübel längs Linie X-X in Figur 8;
- Figur 11: einen Schnitt durch den Dübel der Figur 8 längs Linie XI-XI in Figur 8.

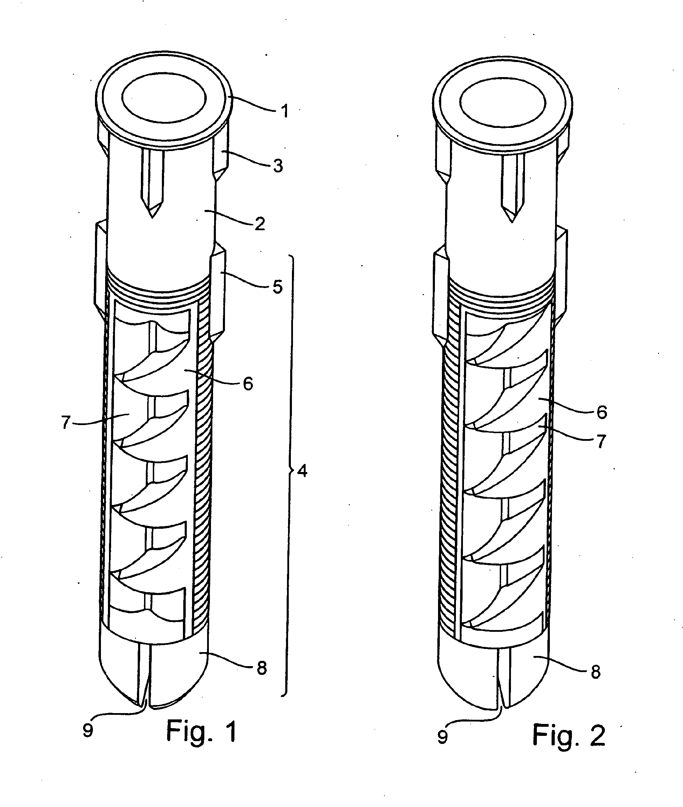

Die Figuren 1 und 2 zeigen perspektivische Ansichten eines Dübels nach der Erfindung. An dem in Figur 1 oberen äußeren Ende enthält die Dübelhülse einen verbreiterten Rand 1, der die Einschiebebewegung der Dübelhülse in ein Dübelloch begrenzen soll. Daran schließt sich ein Bereich 2 auf, in dem die Dübelhülse glattflächig und nicht aufweitbar ist. An der Außenseite dieses nicht aufweitbaren Bereichs 2 sind unterhalb des Rands 1 vier gleichmäßig über den Umfang verteilte Rippen 3 mit einer scharfen Kante ausgebildet. Diese Rippen 3 sollen ein Mitdrehen der Dübelhülse verhindern, wenn eine Schraube in ihren Innenraum eingeschraubt wird.

An den nicht aufweitbaren Bereich 2 schließt sich dann ein Aufspreizbereich 4 an, der über den größten Teil der Dübelhülse verläuft. Im Bereich des Übergangs zwischen dem aufweitbaren und dem nicht aufweitbaren Bereich sind nochmals zwei um 180 Grad versetzte äußere Rippen 5 ausgebildet, die ebenfalls dazu dienen, das Mitdrehen der Dübelhülse zu verhindern. Die mittleren Rippen 5 sind in axialer Verlängerung von Rippen drei angeordnet.

In dem Aufspreizbereich 4 der Dübelhülse gibt es zwei in Längsrichtung verlaufende Felder, von denen bei der Darstellung der Figur 1 ein Feld nach links vorne gerichtet ist, während bei der Darstellung der Figur 2 dieses Feld nach rechts vorne gerichtet ist. Auf der jeweils gegenüberliegenden in den Figuren 1 und 2 nicht sichtbaren Seite sind ebenfalls solche Felder ausgebildet.

In jedem dieser Felder sind bei der dargestellten Ausführungsform mehrere Aufspreizelemente 6 angeordnet, die dreieckig ausgebildet sind. Längs einer Kante des Dreiecks sind sie mit der Dübelhülse einstückig verbunden. Längs der beiden anderen Seiten des Dreiecks sind sie durch in Figur 1 nur schlecht zu sehende Schlitze von dem Rest der Dübelhülse getrennt.

In Längsrichtung zwischen je zwei Aufspreizelementen sind Rücksprungelemente 7 ausgebildet, wobei jeweils ein Rücksprungelement 7 auch oberhalb bzw. unterhalb des ersten beziehungsweise letzten Aufspreizelements 6 ausgebildet ist.

Im Dübelfuß 8, der die Dübelhülse abschließt, ist ein sich quer durch die Dübelhülse erstreckender und gleichzeitig in Längsrichtung verlaufender Schlitz 9 ausgebildet, der zum Ende hin offen ist. Beim Einschrauben der Schraube werden die beiden Teile des Dübelfußes 8 beidseits des Schlitzes 9 nach außen verschwenkt.

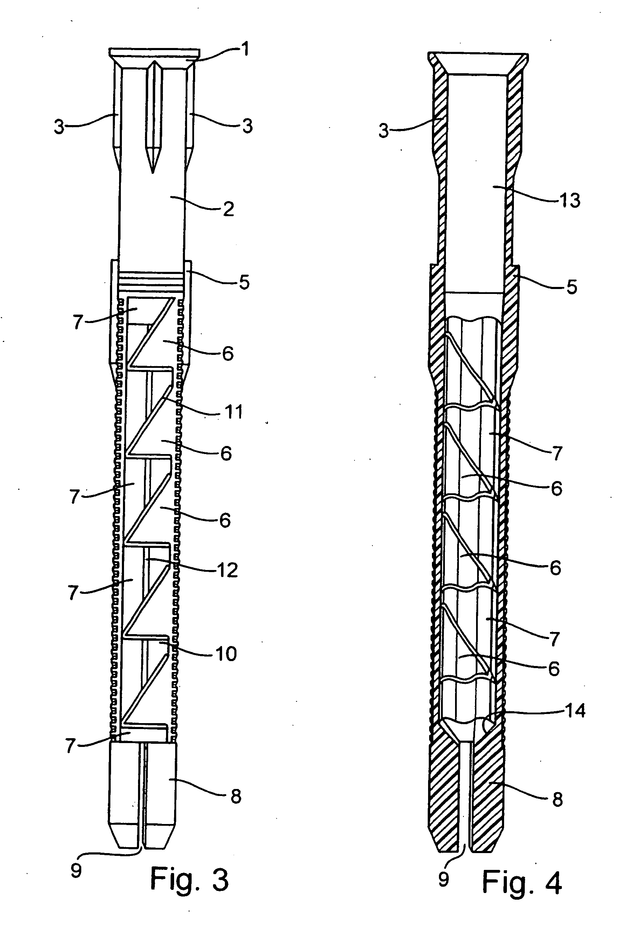

Während in den Figuren 1 und 2 der Unterschied zwischen den Aufspreizelementen 6 und den Rücksprungelementen 7 deutlich hervorging, zeigt die Figur 3 in einer Seitenansicht des Dübels nach der Erfindung, wie die Aufspreizelemente 6 von denen Rücksprungelementen 7 getrennt sind. Die Aufspreizelemente 6 weisen die Form eines rechtwinkligen Dreiecks auf, dessen eine Kathete quer zur Längsrichtung verläuft und durch einen entsprechenden schmalen Schlitz 10 mit parallelen Rändern von dem nächsten Rücksprungelemente 7 getrennt ist. Die andere Kathete verläuft in Längsrichtung der Dübelhülse und bildet die Verbindung zwischen dem Aufspreizelemente 6 und der Dübelhülse. Die Hypotenuse verläuft unter einem Winkel von etwa 45 bis 60 ° gegenüber der bereits erwähnten quer verlaufenden Kathete und ist von dem benachbarten Rücksprungelement 7 ebenfalls durch einen Schlitz 11 mit parallelen Rändern getrennt. Der Abstand zwischen zwei benachbarten Aufspreizelementen 6 ist so gewählt, dass das zwischen ihnen angeordnete Rücksprungelement 7 im Bereich seiner beiden Enden, in Umfangsrichtung gesehen, mit der Dübelhülse verbunden bleibt.

Etwa in der Mitte der Längserstreckung jedes Rücksprungelements 7, in Umfangsrichtung gesehen, ist eine Vertiefung 12 ausgebildet, an der das Rücksprungelement 7 am weitesten in das Innere der Dübelhülse hinein verformt ist.

Figur 4 zeigt eine perspektivische Ansicht einer in Längsrichtung halbierten Dübelhülse. Hier ist zu sehen, dass die Innenkonturen sowohl der Aufspreizelemente 6 als auch der Rücksprungelemente 7 geschwungen ausgebildet sind, und dass beide Konturen in einer Zylinderfläche liegen. Der in Figur 4 zu sehende Innenraum 13 der Dübelhülse dient zur Aufnahme einer Schraube, die, wenn sie eingeschraubt wird, sowohl die Aufspreizelemente 6 als auch die Rücksprungelemente 7 nach außen beaufschlagt. Im Bereich des Übergangs zwischen dem Aufspreizbereich 4 und dem Dübelfuß 8 ist eine Verengung in Form eines Trichters 14 vorgesehen, die beim weiteren Einschrauben der Schraube die beiden Teile des Dübelfußes 8 beidseits des Schlitzes 9 nach außen beaufschlagt.

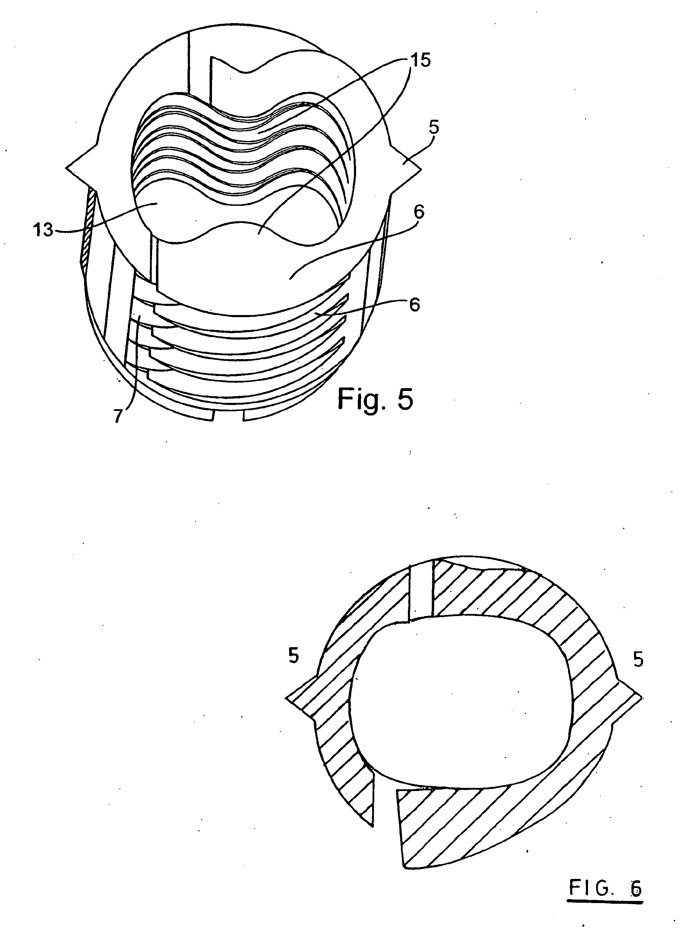

Die Figur 5 zeigt perspektivisch einen abgeschnittenen Teil einer Dübelhülse. Die Aufspreizelemente, von denen die Figur 6 eines im Schnitt zeigt, weisen etwa in der Mitte ihrer Abmessung in Umfangsrichtung gesehen auf der Innenseite eine Verdickung 15 auf, die dazu führt, dass in dem nicht aufgeweiteten Zustand der Dübelhülse der Innenraum 13 etwa die Form einer Acht aufweist. Die gleiche Verdickung ist aber auch an der Innenseite der Rücksprungelemente 7 ausgebildet. Dies bedeutet, dass in nicht aufgeweitetem Zustand der Dübelhülse an der Innenseite keine Vorsprünge und Rücksprünge ausgebildet sind, sondern dass dort die Wand auf einer Zylinderfläche liegt, allerdings keiner Kreiszylinderfläche.

Wird nun durch das Einschrauben einer Schraube, deren Durchmesser etwa der von links nach rechts in Figur 5 verlaufenden Abmessung des Innenraums 13 entspricht, der Dübel aufgeweitet, so werden die Verdickungen 15 radial nach außen verdrängt, so dass jetzt die Außenkontur sowohl der Aufspreizelemente 6 als auch der zwischen ihnen liegenden Rücksprungelemente 7 nach außen wandert. Dadurch bleibt bei einem insgesamt aufgeweiteten Außenumfang die Struktur aus in axialer Richtung abwechselnden Vorsprüngen und Rücksprüngen, wie sie die Figuren 1 und 2 zeigen, erhalten. Dies ist schematisch in Figur 6 dargestellt.

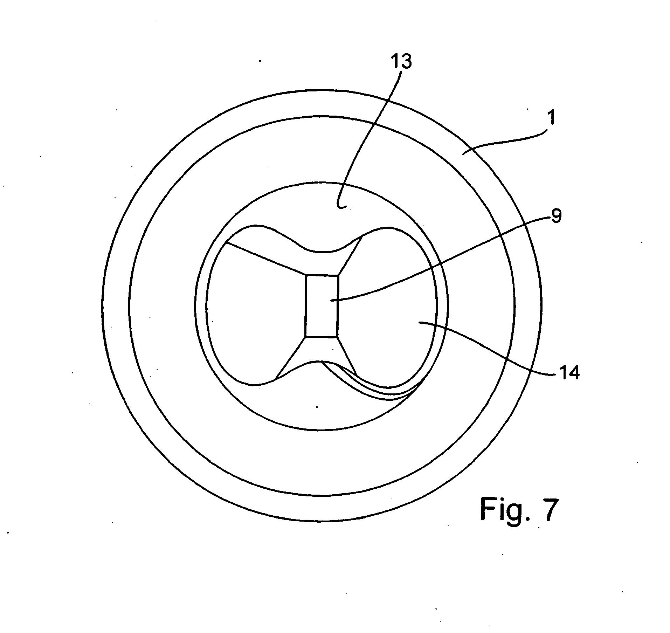

Figur 7 zeigt die Stirnansicht eines Dübels von oben in Figur 3. Der an seinem äußeren Ende einen kreisrunden Querschnitt aufweisende Innenraum 13 geht wegen der Verdickungen 15 an der Innenseite in einen Querschnitt mit beidseitigen Einschnürungen über. Ganz unten sind die Trichterflächen 14 und der zwischen ihnen liegende Schlitz 9 des Dübelfußes zu sehen.

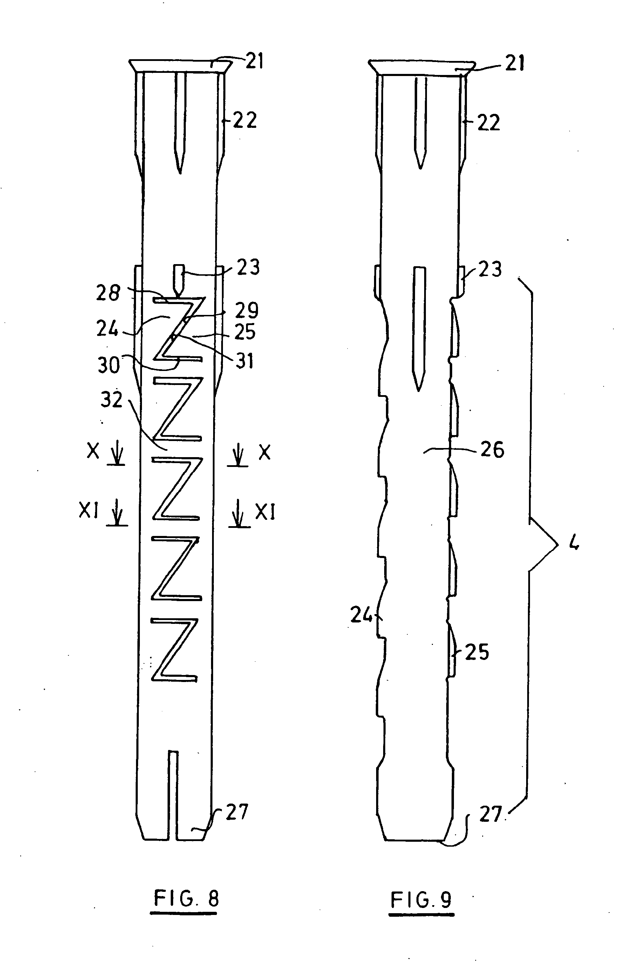

Die Figuren 8 und 9 zeigen Seitenansichten eines Dübels nach einer zweiten Ausführungsform. Der Dübel enthält wiederum einen Aufspreizbereich 4, der von dem äußeren Ende durch einen zylindrischen nicht aufspreizbaren Bereich 20 getrennt ist. Am äußeren Ende ist ein verbreiteter Rand 21 vorhanden, der die Einschiebebewegung der Dübelhülse in das Dübelloch begrenzen soll. In dem nicht aufspreizbaren Bereich 20 ist der Dübel an seiner Außenseite glattflächig. Er weist hier vier in Axialrichtung verlaufende Rippen 22 auf, die ein Mitdrehen der Dübelhülse in dem Dübelloch verhindern sollen. Die Rippen können scharfkantig ausgebildet sein.

Im Übergang zwischen dem nicht aufweitbaren Bereich 20 und dem Aufspreizbereich 4 sind ebenfalls in Längsrichtung verlaufende das Mitdrehen verhindernde Rippen 23 vorhanden, von denen die in Figur 8 seitlich zu sehenden Rippen länger ausgebildet sind, während die in Figur 8 in der Mitte zu sehende Rippe 23 kürzer ausgebildet ist.

Innerhalb des Aufspreizbereichs 4 sind in einem sich etwa über 1/4 des Umfangs erstreckenden Feld mehrere aus der Kontur der Dübelhülse nach außen aufspreizbare Aufspreizelemente 24, 25 vorhanden. In Umfangsrichtung zwischen den Bereichen, in denen diese Aufspreizelemente 24, 25 vorhanden sind, sind Längsstege 26 gebildet, die an ihrer Außenseite verrippt sein können, aber ununterbrochen durchgehen bis zum vorderen Ende 27 der Dübelhülse.

Die Aufspreizelemente sind zu Paaren zusammengefasst, wobei die Aufspreizelemente 24, 25 aller Paare von Aufspreizelemente 24, 25 paarweise identisch zueinander sind. Von dem äußeren Ende der Dübelhülse ausgehend gibt es zunächst ein Aufspreizelement 24, das die Form eines Dreiecks aufweist. Das Dreieck beziehungsweise das Aufspreizelement 24 weist eine Kante 28 auf, die quer zur Längsrichtung des Dübels verläuft. Die andere Kante 29 des Aufspreizelements 24 verläuft schräg zur Längsrichtung, beispielsweise unter einem Winkel von 45° in einer Abwicklung gesehen. Auf gleicher Höhe, das heißt mit gleichem Abstand in Längsrichtung des Dübels gesehen, ist das nächste Aufspreizelement 25 komplementär ausgebildet, hat also eine quer zu Längsrichtung verlaufende Kante 30, die an dem der Dübelspitze 27 zugeordnete Ende des Aufspreizelements 25 angeordnet ist. Die zweite Kante dieses Aufspreizelements 25 verläuft parallel zu der schräg verlaufende Kante 29 des gegenüberliegenden Aufspreizelements 24. Dadurch ist zur Abgrenzung der Aufspreizelemente 24, 25 ein Z-förmiger Schlitz gebildet.

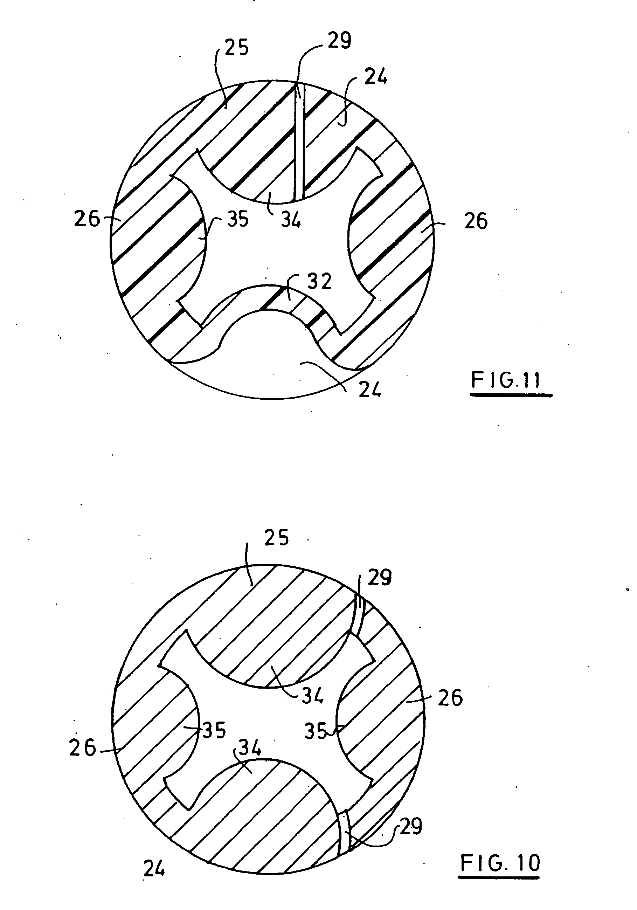

An dieses Paar von Aufspreizelementen 24, 25 schließt sich ein an beiden Seiten mit der Dübelhülse einstückig verbundenes Rücksprungelement 32 an, das als schmales Verbindungsband zwischen den beiden Längsstegen 26 ausgebildet ist. Seine Form in Querrichtung geht später noch aus Figur 11 hervor.

Bei der dargestellten Ausführungsform in Figur 8 sind fünf solcher Paare von Aufspreizelementen 24, 25 vorhanden, die alle die gleiche Größe haben und die durch jeweils ein Rücksprungelement 32 voneinander getrennt sind. Die Breite der Rücksprungelemente 32 ist ebenfalls überall gleich.

Im vorderen Bereich der Dübelhülse ist ein von der Spitze 27 ausgehender Längsschlitz vorhanden, der über einen kurzen Bereich reicht.

Auf der gegenüberliegenden in Figur 8 hinteren Seite der Dübelhülse ist ein gleiches Feld von Aufspreizelementen 24, 25 vorhanden, die aber um einen halben Rapport in Längsrichtung versetzt angeordnet sind. Daher sieht man in der Ansicht der Figur 9, die aus einer um 90° versetzten Richtung gezeichnet ist, dass die Aufspreizelemente 25 auf der rechten Seite von den Aufspreizelementen 24 auf der linken Seite einen axialen Abstand aufweisen.

Die Aufspreizelemente 24, 25 sind mit der einen Seite des Dreiecks einstückig mit der Dübelhülse verbunden und können gegenüber der Dübelhülse durch ein Spreizelement, beispielsweise eine Schraube, von innen nach außen verformt werden. Wie man der Figur 9 entnehmen kann, können die Aufspreizelemente 24, 25 um ein gewisses Ausmaß schon nach außen vorgespreizt hergestellt sein.

Figur 10 zeigt jetzt einen Querschnitt durch den Dübel der Figur 8 und 9 längs Linie X-X in Figur 8. Im unteren vorderen Bereich führt der Querschnitt also durch das Aufspreizelement 24, während im hinteren Bereich ein Aufspreizelement 25 auf der gegenüberliegenden Seite im Schnitt dargestellt ist. Die Aufspreizelemente 24, 25 sind so ausgebildet, dass sie auf ihren Innenseiten eine in Längsrichtung des Dübels verlaufende Verdickung aufweisen, die als in Längsrichtung verlaufende Rippe 34 gedacht werden kann. Diese Rippe 34 ist bei beiden Arten von Aufspreizelementen, also sowohl 24 als auch 25, vorhanden.

Der Bereich, in dem die Aufspreizelemente 24, 25 vorhanden sind, erstreckt sich auf beiden Seiten über etwa 1/4 des Umfangs. Der restliche Teil wird von den Längsstegen 26 gebildet, die auf ihrer Außenseite zwar verrippt sind, aber vollständig ohne Trennung durchgehen. Auch diese Längsstege 26 haben auf ihrer in das Innere der Dübelhülse gerichteten Seite eine in Längsrichtung verlaufende Rippe 35, die etwa die gleiche Form und Größe aufweist wie die Rippen 34 auf der Innenseite der Aufspreizelemente 24, 25.

Dadurch ergibt sich als Querschnitt für die Innenöffnung der Dübelhülse eine Art Malteserkreuz.

Figur 11 zeigt jetzt einen Schnitt durch die Dübelhülse in Höhe eines Rücksprungelements 32, das an beiden Seiten mit den Längsstegen 26 einstückig verbunden ist. Diese Rücksprungelemente 32 bilden also an der Außenseite eine nach innen gerichtete Einbiegung, verlaufen an der Innenseite der Dübelhülse aber bündig mit den Rippen 34 auf der Innenseite der Aufspreizelemente 24, 25.

Wird in den Dübel eine Schraube eingeschraubt, so formt sie sich nicht nur ihr eigenes Gewinde in den Rippen 34, 35, sondern verschwenkt die Aufspreizelemente 24, 25 nach außen und drückt außerdem die Längsstege 26 ebenfalls nach außen. Dies wird dadurch ermöglicht, dass die Rücksprungelemente 32 als schmale und biegsame Verbindungsstreifen sich gerade richten und dadurch die Durchmessererweiterung an der Außenseite ermöglichen. Außerdem sind die Aufspreizelemente 24, 25 jeweils nur mit einer Seite der Dübelhülse verbunden.

## Patentansprüche

1. Dübel, mit
1.1 einer Dübelhülse, die
1.2 einen sich in ihrer Längsrichtung erstreckenden Innenraum (13) zur Aufnahme eines Spreizelements sowie
1.3 einen Aufspreizbereich (4) aufweist, in dem
1.4 eine Vielzahl von Aufspreizelementen (6), die
1.4.1 bei Aufspreizen der Dübelhülse nach außen bewegbar sind, sowie
1.5 eine Vielzahl von Rücksprungelementen (7) angeordnet sind, die
1.6 an ihren beiden Enden, in Umfangsrichtung gesehen, mit der Dübelhülse verbunden sind und
1.7 bei Aufspreizen der Dübelhülse nach außen bewegbar sind.

2. Dübel nach Anspruch 1, bei dem in dem nicht aufgeweiteten Zustand des Dübels die Rücksprungelemente (7) mit ihren Außenkonturen gegenüber den Außenkonturen der Aufspreizelemente (7) nach innen versetzt angeordnet sind.

3. Dübel nach einem der vorhergehenden Ansprüche, bei dem in dem nicht aufgeweiteten Zustand der Dübelhülse die Innenkonturen von Aufspreizelementen (6) und Rücksprungelementen (7) bündig zueinander verlaufen.

4. Dübel nach einem der vorhergehenden Ansprüche, bei dem in dem nicht aufgeweiteten Zustand der Dübelhülse die Innenflächen der Aufspreizelemente (6) und der Rücksprungelemente (7) gegenüber einer Kreiszylinderfläche nach innen vorspringen.

5. Dübel nach einem der vorhergehenden Ansprüche, bei dem die Aufspreizelemente (6) und die Rücksprungelemente (7) in Umfangsrichtung etwa die gleiche Erstreckung aufweisen.

6. Dübel nach einem der vorhergehenden Ansprüche, bei dem die Aufspreizelemente (6) und die Rücksprungelemente (7) in mindestens einem in Längsrichtung der Dübelhülse verlaufenden Feld angeordnet sind.

7. Dübel nach Anspruch 6, bei dem zwei derartige Felder diametral einander gegenüber liegend angeordnet sind.

8. Dübel nach einem der vorhergehenden Ansprüche, bei dem die Aufspreizelemente (6) gegenüber der Dübelhülse verschwenkbar und/oder verformbar sind.

9. Dübel nach einem der vorhergehenden Ansprüche, bei dem die Rücksprungelemente (7) gegenüber der Dübelhülse verbiegbar sind.

10. Dübel nach einem der vorhergehenden Ansprüche, bei dem die Aufspreizelemente (6) Dreieckform aufweisen und an einer Seite des Dreiecks mit der Dübelhülse verbunden sind.

11. Dübel nach einem der vorhergehenden Ansprüche, bei dem die Rücksprungelemente (7) von den Aufspreizelementen (6) durch Schlitze (10, 11) getrennt sind.

12. Dübel nach einem der Ansprüche 10 oder 11, bei dem die Anlenkkante der Aufspreizelemente (6) an der Dübelhülse in Längsrichtung der Dübelhülse verläuft.

13. Dübel nach einem der Ansprüche 6 bis 12, bei dem die Aufspreizelemente insbesondere abwechselnd an beiden Rändern des Feldes angeformt sind.

14. Dübel nach einem der vorhergehenden Ansprüche, bei dem ein dreieckiges Aufspreizelement eine quer zur Längsachse des Dübels verlaufende Kante und eine schräg zur Längsachse des Dübels verlaufende Kante aufweist.

15. Dübel nach Anspruch 14, bei dem das in Längsrichtung folgende Aufspreizelement komplementär ausgebildet ist.

16. Dübel nach einem der vorhergehenden Ansprüche, bei dem zwischen je einem Paar von Aufspreizelementen ein Rücksprungelement angeordnet ist.

17. Dübel nach einem der Ansprüche 6 bis 16, bei dem die beiden die Aufspreizelemente enthaltenden Felder durch jeweils einen ununterbrochenen Längssteg getrennt sind.

18. Dübel nach Anspruch 17, bei dem mindestens einer der Längsstege an seiner Außenseite gerippt ist, wobei die Rippen in Umfangsrichtung verlaufen.

19. Dübel nach einem der vorhergehenden Ansprüche, bei dem an der Innenseite der Längsstege jeweils eine vorzugsweise in Längsrichtung verlaufende Rippe ausgebildet ist.

20. Dübel nach einem der vorhergehenden Ansprüche, bei dem die Querschnittsform der Innenöffnung des Dübels im Aufspreizbereich etwa die Form eines Malteser Kreuzes aufweist.

21. Dübel nach einem der vorhergehenden Ansprüche, bei dem die Rücksprungelemente als Verbindungsstreifen konstanter Breite zwischen den Längsstegen ausgebildet sind.

22. Dübel nach einem der vorhergehenden Ansprüche, bei dem die Aufspreizelemente auf jeder Seite als wiederkehrendes Muster ausgebildet sind.

23. Dübel nach einem der vorhergehenden Ansprüche, bei dem die Aufspreizelemente und/oder die Rücksprungelemente auf beiden Seiten des Dübels um einen halben Rapport versetzt angeordnet sind.

## Claims

1. A dowel with
1.1 a dowel shaft, which features
1.2 an internal space (13) extending in its longitudinal direction for accommodating a spreading element as well as
1.3 a spreading section (4) in which
1.4 a plurality of spreading elements (6) that
1.4.1 are movable by spreading the dowel shaft outwards as well as
1.5 a plurality of back springing elements (7), are disposed,
1.6 whose both ends, viewed in circumferential direction, are connected with the dowel shaft and
1.7 are movable when the dowel shaft is spread outwards.

2. The dowel according to Claim 1, in which, in the non-spread state of the dowel, the back springing elements (7) with their external contours are disposed inwardly offset in respect to the external contours of the spreading elements (6).

3. The dowel according to one of the preceding claims, in which, in the non-spread state of the dowel shaft, the internal contours of the spreading elements (6) and the back springing elements (7) run flush towards one another.

4. The dowel according to one of the preceding claims, in which, in the non-spread state of the dowel shaft, the internal surfaces of both the spreading elements (6) and back springing elements (7) protrude inwards relative to a circularly cylindrical surface.

5. The dowel according to one of the preceding claims, in which the spreading elements (6) and the back springing elements (7) in the circumferential direction somewhat feature the same extension.

6. The dowel according to one of the preceding claims, in which the spreading elements (6) and the back springing elements (7) are disposed at least in a field running in longitudinal direction of the dowel shaft.

7. The dowel according to Claim 6, in which two such fields are disposed diametrically opposite to one another.

8. The dowel according to one of the preceding claims, in which the spreading elements (6) can be swivelled and/or deformed relatively to the dowel shaft.

9. The dowel according to one of the preceding claims, in which the back springing elements (7) can be bent relatively to the dowel shaft.

10. The dowel according to one of the preceding claims, in which the spreading elements (6) feature a triangular shape and are connected with the dowel shaft on one side of the triangle.

11. The dowel according to one of the preceding claims, in which the back springing elements (7) are separated from the spreading elements (6) by means of slits (10, 11).

12. The dowel according to one of Claim 10 or 11, in which the linking edge of the spreading elements (6) on the dowel shaft runs in longitudinal direction along the dowel shaft.

13. The dowel according to one of Claims 6 to 12, in which the spreading elements are particularly alternately moulded on both edges of the field.

14. The dowel according to one of the preceding claims, in which a triangular spreading element features one edge running transversely to the longitudinal axis of the dowel and one edge running obliquely to the longitudinal axis of the dowel.

15. The dowel according to Claim 14, in which the spreading element following in longitudinal direction is formed complementarily.

16. The dowel according to one of the preceding claims, in which a back springing element is disposed between each pair of spreading elements.

17. The dowel according to one of Claims 6 to 16, in which the two fields containing the spreading elements are separated by an uninterrupted longitudinal web.

18. The dowel according to Claim 17, in which at least one of the longitudinal webs is ribbed on its outer side, wherein the ribs run in circumferential direction.

19. The dowel according to one of the preceding claims, in which a rib respectively running preferably in longitudinal direction is formed on the internal side of the longitudinal webs.

20. The dowel according to one of the preceding claims, in which the cross-sectional shape of the internal opening of the dowel in the spreading section approximately features the form of a Maltese cross.

21. The dowel according to one of the preceding claims, in which the back springing elements are formed as connection strips of constant width between the longitudinal webs.

22. The dowel according to one of the preceding claims, in which the spreading elements on each side are formed as a recurrent pattern.

23. The dowel according to one of the preceding claims, in which the spreading elements and/or the back springing elements on both sides of the dowel are disposed offset by a half of a pattern repeat.

## Revendications

1. Cheville comprenant
1.1 une douille qui
1.2 présente une cavité intérieure (13) s'étendant dans son sens longitudinal pour recevoir un élément expanseur, et qui
1.3 présente une zone d'expansion (4) dans laquelle
1.4 un grand nombre d'éléments expanseurs (6) qui
1.4.1 lors de l'expansion de la douille de cheville sont déplaçables vers l'extérieur, ainsi
1.5 qu'un grand nombre d'éléments à retrait (7) qui
1.6 en leurs deux extrémités, en observant dans le sens circonférentiel, sont reliés à la douille de la cheville et qui
1.7 sont déplaçables vers l'extérieur pendant l'expansion de la douille de cheville.

2. Cheville selon la revendication 1, sur laquelle, lorsqu'elle ne se trouve pas en l'état expansé, les contours extérieurs des éléments à retrait (7) sont agencés décalés vers l'intérieur face aux contours extérieurs des éléments expanseurs (6).

3. Cheville selon l'une des revendications précédentes, sur laquelle, lorsque la douille de cheville ne se trouve pas en l'état expansé, les contours intérieurs d'éléments expanseurs (6) et d'éléments à retrait (7) convergent en affleurement les uns vers les autres.

4. Cheville selon l'une des revendications précédentes, sur laquelle, lorsque la douille de cheville ne se trouve pas en l'état expansé, les surfaces intérieures des éléments expanseurs (6) et des éléments à retrait (7) font saillie vers l'intérieur en face d'une surface cylindrique circulaire.

5. Cheville selon l'une des revendications précédentes, sur laquelle les éléments expanseurs (6) et les éléments à retrait (7) s'étendent approximativement du même quantum dans le sens circonférentiel.

6. Cheville selon l'une des revendications précédentes, sur laquelle les éléments expanseurs (6) et les éléments à retrait (7) sont agencés dans au moins un champ s'étendant dans le sens longitudinal de la douille de cheville.

7. Cheville selon la revendication 6, sur laquelle deux champs de ce genre sont agencés en se faisant diamétralement face.

8. Cheville selon l'une des revendications précédentes, sur laquelle il est possible de faire pivoter et/ou de déformer les éléments expanseurs (6) par rapport à la douille de cheville.

9. Cheville selon l'une des revendications précédentes, sur laquelle il est possible de couder les éléments à retrait (7) par rapport à la douille de cheville.

10. Cheville selon l'une des revendications précédentes, sur laquelle les éléments expanseurs (6) présentent une forme triangulaire et sont reliés sur un côté du triangle avec la douille de cheville.

11. Cheville selon l'une des revendications précédentes, sur laquelle les éléments à retrait (7) sont séparés des éléments expanseurs (6) par des fentes (10, 11).

12. Cheville selon l'une des revendications 10 ou 11, sur laquelle l'arête d'articulation que comportent les éléments expanseurs (6) longe la douille de cheville dans le sens longitudinal de ladite douille.

13. Cheville selon l'une des revendications 6 à 12, sur laquelle les éléments expanseurs ont été moulés en particulier en alternance contre les deux bords du champ.

14. Cheville selon l'une des revendications précédentes, sur laquelle un élément expanseur triangulaire présente une arête au tracé transversal par rapport à l'axe longitudinal de la cheville et une arête au tracé oblique par rapport à l'axe longitudinal de la cheville.

15. Cheville selon la revendication 14, sur laquelle l'élément expanseur suivant dans le sens longitudinal est configuré complémentaire.

16. Cheville selon l'une des revendications précédentes, sur laquelle un élément à retrait a été agencé chaque fois entre une paire d'éléments expanseurs.

17. Cheville selon l'une des revendications 6 à 16, sur laquelle les deux champs contenant les éléments expanseurs sont séparés chacun par une nervure longitudinale ininterrompue.

18. Cheville selon la revendication 17, sur laquelle au moins l'une des nervures longitudinales présente des côtes sur sa face extérieure, ces côtes ayant un tracé circonférentiel.

19. Cheville selon l'une des revendications précédentes, sur laquelle a été configurée chaque fois une côte au tracé de préférence longitudinal contre le côté intérieur des nervures longitudinales.

20. Cheville selon l'une des revendications précédentes, sur laquelle la forme, vue en coupe, de l'orifice intérieur de la cheville ressemble, dans la zone d'expansion, approximativement à celle d'une croix de Malte.

21. Cheville selon l'une des revendications précédentes, sur laquelle les éléments à retrait sont configurés comme des rubans de liaison, dotés d'une largeur constante, entre les nervures longitudinales.

22. Cheville selon l'une des revendications précédentes, sur laquelle les éléments expanseurs sont configurés sur chaque côté sous forme de motifs répétitifs.

23. Cheville selon l'une des revendications précédentes, sur laquelle les éléments expanseurs et/ou les éléments à retrait ont été agencés décalés d'un demi-rapport sur les deux côtés de la cheville.
